# EUROPEAN PATENT SPECIFICATION

(11) **EP 3 643 543 B1**
(45) Date of publication and mention of the grant of the patent: **30.06.2021**
(21) Application number: 18202835.7
(22) Date of filing: 26.10.2018
(51) Int. Cl.: B60G 17/005, B60G 17/052

(54) **DOUBLE SOLENOID IN TRAILER AIR SUSPENSION CONTROL DEVICE**
DOPPELMAGNETVENTIL IN DER STEUERUNGSVORRICHTUNG EINER ANHÄNGERLUFTFEDERUNG
DOUBLE SOLÉNOÏDE DANS UN DISPOSITIF DE COMMANDE DE SUSPENSION À AIR DE REMORQUE

(43) Date of publication of application: 29.04.2020
(73) Proprietor: ZF CV Systems Europe BV, 1170 Brussels (BE)
(72) Inventor: Kopciuch, Michal, 52-238 Wroclaw (PL)
(74) Representative: Koschnitzki, Thomas

(56) References cited:
- EP-A1- 1 604 845
- EP-A1- 2 540 537

## Description

The invention relates to a valve device for an air suspension system in a vehicle, comprising a supply port for receiving a supply pressure, at least a first bellows port for providing a first bellows pressure, a first lifting/lowering valve manually operable by a hand lever and in fluid connection with the supply port and the first bellows port, wherein the hand lever is operable to selectively connect the first bellows port with the supply port for providing the first bellows pressure, and a locking unit for locking the position of the hand lever, the locking unit comprising a locking valve biased into the locking position and comprising a release chamber, wherein the locking valve is switchable into a release position upon a release pressure being supplied into the release chamber.

Such valve devices are used to regulate the air volume in suspension bellows of an air suspension system. Thus, they regulate the level of the trailer with respect to the truck of the vehicle, towing the trailer. Increase and decrease of the air volume in the bellows is electronically controlled by an electronic control unit according to detected requirements. In addition thereto, it is necessary to manually regulate the air volume in the bellows, e.g. during loading and unloading the trailer, for e.g. adapting the level of the trailer with respect to a loading ramp. For achieving this, separate valve elements have been used in the past which are manually operable for lifting or lowering the trailer with respect to the truck. One such example is disclosed in DE 10 2004 035 691 A1, in which the electrically controlled valve device is combined with a manual operable unit.

A further device is known from EP 2 516 187 A1, in which the valve device has at least one cushion connection connectable to the pneumatic spring cushion of the air suspension system, a reserve connection connectable to a compressed air reserve, and a venting connection connectable to the atmosphere. The valve device further has an electrical actuation arrangement and a manual actuation element. The valve device has a pneumatically actuable working valve arrangement as a result of the actuation of which the cushion connection can be selectively connected to the reserve connection or to the venting connection or shutoff. The working valve arrangement can be actuated pneumatically both by the electrical actuation arrangement and by a pneumatic valve arrangement actuable via the manual actuation element. The working valve arrangement has at least one pneumatically actuable holding valve. A pneumatic actuation connection of the at least one holding valve can, for the actuation thereof, be connected to the cushion connection. The working valve arrangement may thus be actuated electronically and manually. Further, the valve device disclosed therein also allows lifting and lowering of the trailer when the trailer is not connected to the truck and thus is not provided with any current.

A still further device which comprises the features of the preamble of claim 1 is disclosed in EP 2 540 537 A1. An air suspension assembly for a commercial vehicle is disclosed, which comprises a lifting/lowering valve construction group which produces a first control pressure dependent on a manual actuation of at least one lifting/lowering valve. At least one electropneumatic pilot valve, which produces a second control pressure dependent on an electric control signal, is provided. The air suspension assembly further comprises a levelling control valve construction group with at least one levelling control valve, via which for changing the level and for holding the level constant in a drive operation, an aeration and/or de-aeration of at least one air suspension bellow is achieved, where the lifting/lowering valve that can be manually operated and the electro pneumatic pilot valve are arranged in parallel line branches and the at least one levelling control valve can be biased both, with the first control pressure as well as with the second control pressure.

Usually, for releasing the locking unit the supply pressure from the supply port is used. However, there are cases in which no supply pressure is delivered to the supply port, e.g. in cases when the respective trailer is parked. In such cases there is a problem to release the locking unit. In some cases, this is solved by an external pipe for delivering the required pressure. This may result in additional parts and a more expensive system. It is an objection of the invention to provide a valve device of the aforementioned type which is simplified and required less parts. Moreover it is a desire to increase safety and stability of the first lifting/lowering valve.

According to the invention, the above-mentioned problem is solved by an electromagnetic double valve arrangement fluidly connected to the release chamber of the locking unit and being switchable between a first release position in which the release chamber is in fluid connection with an exhaust port and a second supply position in which the release chamber is in fluid connection with the supply port and the first bellows port. In former systems, the release chamber was only connectable to either the exhaust port or the supply port. According to the invention, now the release chamber is connectable to both, the supply port and the first bellows port, thus, the pressure in the release chamber is comprised of the supply pressure from the supply port and the first bellows pressure at the first bellows port. Thus, when the trailer is in the lowering position, the pressure in the release chamber will be much lower than in cases in which the trailer is in the lifting position.

Moreover, in situations in which no supply pressure is supplied but rather ambient pressure is delivered at the supply port, still the locking unit can be released using the pressure from the first bellows port. Thus, even without supply pressure the locking unit can be released and the hand lever moved manually. The need for an external pipe is overcome by this solution.

According to a first preferred embodiment, the electromagnetic double valve arrangement comprises a first control valve and a second control valve. For example, the first control valve can be used to provide the supply pressure into the release chamber, and the second control valve can be used to provide the pressure from the first bellows port to the release chamber. Both, the first and the second control valves, may be in principle of identical design, which could reduce costs.

Preferably, the first control valve and the second control valve are switchable simultaneously. For example, the first and the second control valves are connected to the same electronic control unit which switches both valves simultaneously, or one signal is provided to both, the first and the second control valves. It is also contemplated that the first and the second control valves are integrated into one combined valve which has the first and the second control valves, so that they are switched simultaneously. For example, both, the first and the second control valves are switched when it is detected that the trailer exceeds a predetermined speed limit, e.g. 5 km/h.

Preferably, the first control valve comprises a first control valve port connected to the supply port, a second control valve port connected to the release chamber and a third control valve port connected to the exhaust port. In a similar manner, the second control valve preferably comprises a fourth control valve port connected to the first bellows port, a fifth control valve port connected to the release chamber, and a sixth control valve port connected to the exhaust port. Both, the first and the second control valves, according to this embodiment, preferably are formed as 3/2-way valves. Preferably, both, the first and the second control valves are spring biased into a first position. In this first position, preferably the second control valve port is connected to the third control valve port, and the fifth control valve port is connected to the sixth control valve port. Thus, in this first position, the release chamber is connected to the exhaust and ambient pressure is supplied to the release chamber. Upon receipt of a respective signal, both, the first and the second control valves switch into the second position, in which the second control valve port preferably is connected to the first control valve port so that supply pressure is supplied to the release chamber. Also, the fifth control valve port is connected to the fourth control valve port, so that the first bellows pressure is supplied to the release chamber, also. Usually, when a trailer is transported on a railway vehicle, there is no electric supply to the trailer vehicle. Thus, the first and the second control valves are in the first position and release chamber is supplied with ambient pressure. The respective locking unit thus is locked and locks the position of the hand lever so that the first lifting/lowering valve does not switch into a driving or a lifting position.

Preferably, the locking valve is or comprises a return-to-ride valve. A return-to-ride valve is usually used in such valve devices and on the one hand can block the position of the manually operable hand lever and on the other hand is able to bring back the first lifting/lowering valve into the driving position and also bring back the level of pressurized air in the bellows to the previous level when the hand lever is switched to the driving position manually. A suitable return-to-ride valve, for example, is disclosed in EP 2 516 187 A1.

In a further preferred embodiment, the first lifting/lowering valve comprises a first lifting/lowering valve port connected to the first bellows port, a second lifting/lowering valve port connected to the exhaust port, a third lifting/lowering valve port connected to the supply port, and a fourth lifting/lowering valve port connected to a first levelling valve port. The first lifting/lowering valve preferably comprises at least three switching positions, namely a lowering position, a driving position and a lifting position. In the lowering position, the first bellows port shall be de-aerated, in the driving position, the first bellows port shall be at least partially aerated, and in the lifting position, the first bellows port shall be fully aerated. Thus, in a lowering position, the first lifting/lowering valve port is connected to the second lifting/lowering valve port, in a driving position, the first lifting/lowering valve port is connected to the fourth lifting/lowering valve port, and in a lifting position, the first lifting/lowering valve port is connected to the third lifting/lowering valve port. Thus, in the driving position, the first bellows port is connected to the first levelling valve port, which is used during to automatically realized the aerating and de-aerating function. Thus, the lifting/lowering valve (which is not part of the present invention) is connected to the first lifting/lowering valve port and supplies the respective bellows pressure to this port, which is then supplied via the first lifting/lowering valve to the first bellows port.

Preferably, the valve device further comprises a second lifting/lowering valve for a second circuit. The second lifting/lowering valve is only optional, but for some applications, two air suspension circuits for the trailer are used. The second lifting/lowering valve may be switchable together with the first lifting/lowering valve, or may only be switchable manually.

Preferably, the second lifting/lowering valve comprises a fifth lifting/lowering valve port connected to a second bellows port, a sixth lifting/lowering valve port connected to the exhaust port, a seventh lifting/lowering valve port connected to the supply port and an eighth lifting/lowering valve port connected to a second levelling valve port. In general, the first and the second lifting/lowering valves are identically formed and therefore reference is made to the above description for the first lifting/lowering valve.

Also, the second lifting/lowering valve comprises a lowering position, a driving position and a lifting position. Preferably, in a lowering position of the second lifting/lowering valve, the first lifting/lowering valve port is connected to the sixth lifting/lowering valve port, in a driving position, the fifth lifting/lowering valve port is connected to the eighth lifting/lowering valve port, and in a lifting position, the fifth lifting/lowering valve port is connected to the seventh lifting/lowering valve port.

Thus, the functions of the first and the second lifting/lowering valves are realized in the same time for both circuits. In case that one of the first and the second lifting/lowering valves has a failure, the second one of the first and second lifting/lowering valves may still carry out the respective functions.

Moreover, it is preferred that the valve device comprises a check port and a shutoff valve for closing off the check port. The check port may be used to check pressure in the bellows by an operator. The shutoff valve preferably is biased into a closed position and may be electrically actuated by a respective signal.

For a more complete understanding of the invention, the invention will now be described in detail with reference to the accompanying drawings. The detailed description will illustrate and describe what is considered as a preferred embodiment of the invention.

It is therefore intended that the invention may not be limited to the exact form and detail shown and described herein, nor to anything less than the whole of the invention disclosed herein and as claimed herein after.

In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

In the accompanying drawings:
Fig. 1 shows a first layout of the valve device according to the invention; and
Fig. 2 shows a cross section of a valve device according to the invention.

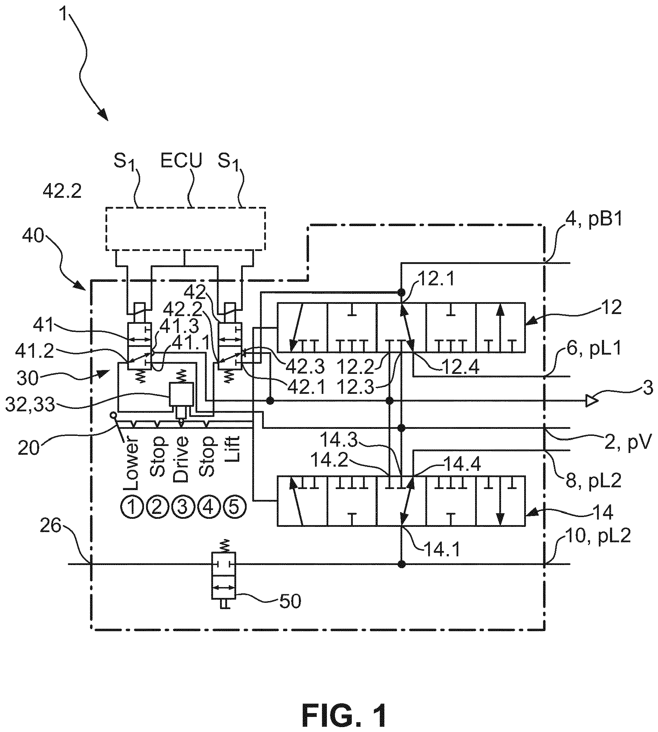

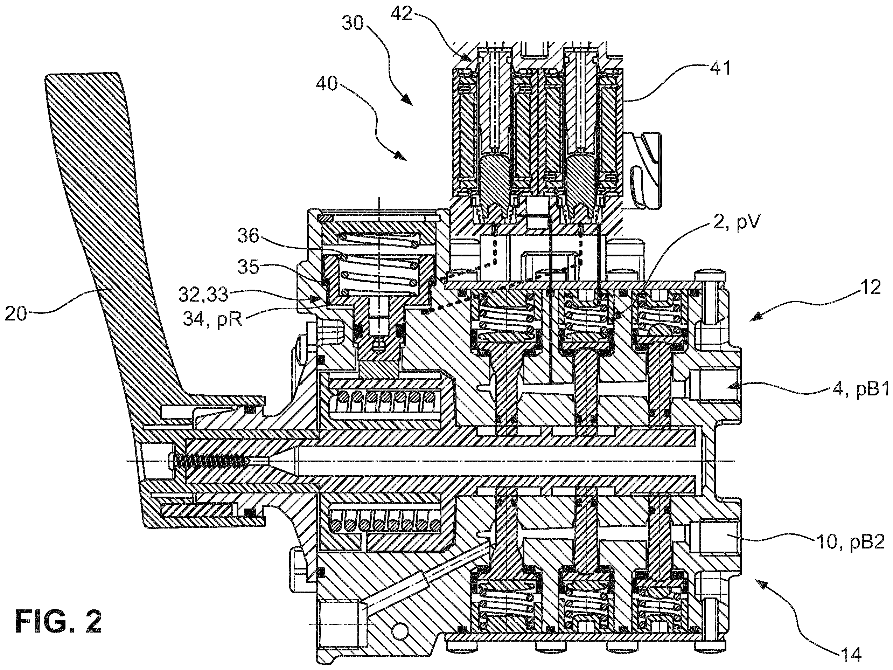

According to Fig. 2, a valve device 1 for an air suspension system in a trailer of a vehicle comprises a supply port 2 for receiving a supply pressure pV. The supply pressure pV may, for example, be supplied by a reservoir of the trailer which is not shown in Fig. 1. The supply port 2 may also be provided with a check valve, to prevent flow of air out of the valve device 1 through the supply port 2. Moreover, the valve device 1 comprises an exhaust port 3 for de-aerating the valve device 1. It shall be understood that also two or more exhaust ports can be provided, dependent on the respective design of the housing of the valve device 1 and environmental constraints in the vehicle.

The valve device 1 further comprises a first bellows port 4 for providing a first bellows pressure pB1 to bellows of the air suspension system of the trailer. During a normal driving situation, the first bellows pressure pB1 usually is supplied via a first levelling valve port 6 which can be connected to a levelling valve (not shown). The levelling valve provides a first levelling pressure pL1 at the first levelling valve port 6. A levelling valve usually provides a respective levelling pressure during a driving situation which is automatically adjusted to a required height and level of the trailer. The valve device 1 according to the present invention receives the levelling pressure and guides it to the first bellows port 4.

According to the present embodiment, the valve device 1 further comprises a second levelling valve port 8 for receiving a second levelling pressure pL2, and a second bellows port 10 for providing a second bellows pressure pB2. The second levelling port 8 and the second bellows port 10 are used for a second circuit guiding the second bellows pressure pB2 to the bellows of the trailer. Both, the first bellows port 4 and the second bellows port 10 are connected with the same bellows of the air suspension system.

The valve device 1 comprises a first lifting/lowering valve 12 and a second lifting/lowering valve 14. The first lifting/lowering valve 12 is provided for the first circuit and the first bellows port 4 as well as the first levelling valve port 6. The second lifting/lowering valve 14 accordingly is provided for the second circuit and thus for the second levelling valve port 8 and the second bellows port 10. Both, the first and the second lifting/lowering valves 12, 14 are connected to a hand lever 20 which is manually operable to push the first and second lifting/lowering valves 12, 14 in respective positions which will be described later.

The first lifting/lowering valve 12 comprises a first lifting/lowering valve port 12.1 which is connected to the first bellows port 4. It further comprises a second lifting/lowering valve port 12.2 which is connected to the exhaust port 3. A third lifting/lowering valve port 12.3 is connected to the supply port 2 and receives the supply pressure pV. A fourth lifting/lowering valve port 12.4 is connected to the first levelling valve port 6 and receives the first levelling pressure pL1. In this embodiment, the first lifting/lowering valve 12 comprises five switching positions. The first switching position is a lowering position, the second switching position a stop position, the third switching position a drive position, the fourth switching position a stop position and the fifth switching position a lift position. In the first and the second stop positions, all ports are closed and no air may flow through the first lifting/lowering valve 12. It shall be understood that the stop positions are only optional and could be left away in alternative embodiments.

In the lowering position, the first bellows port 4 shall be de-aerated for lowering the trailer. Thus, in the lowering position, the first lifting/lowering valve port 12.1 is connected to the second lifting/lowering valve port 12.2, so that the first bellows port 4 is connected with the exhaust 3. When the first lifting/lowering valve 12 is pushed into the driving position, the fourth lifting/lowering valve port 12.4 is connected with the first lifting/lowering valve port 12.1. In this position, the first levelling valve port 6 is connected to the first bellows port 4 and thus the first levelling pressure pL1 is supplied at the first bellows port 4 to provide the first bellows pressure pB1. In the lifting position, the first bellows port 4 will be aerated fully and thus, the first lifting/lowering valve port 12.1 is connected with the third lifting/lowering valve port 12.3, so that supply pressure pV is provided at the first bellows port 4.

In the same manner, the second lifting/lowering valve 14 comprises a fifth lifting/lowering valve port 14.1 which is connected with the second bellows port 10. A sixth lifting/lowering valve port 14.2 is connected to the exhaust 3. A seventh lifting/lowering valve port 14.3 is connected with the supply port 2 for receiving the supply pressure pV, and an eighth lifting/lowering valve port 14.4 is connected to the second levelling valve port 8. Again, in the lowering position, the fifth lifting/lowering valve port 14.1 is connected with the sixth lifting/lowering valve port 14.2, so that the second bellows port 10 is connected with the exhaust and ambient pressure is supplied at the second bellows port 10. In the drive position, the fifth lifting/lowering valve port 14.1 is connected with the eighth lifting/lowering valve port 14.4, so that the second levelling pressure pL2, which might be identical to the first levelling pressure pL1, is supplied via the second levelling valve port 8, the second lifting/lowering valve 14 at the second bellows port 10. In the lifting position, the fifth lifting/lowering valve port 14.1 is connected with the seventh lifting/lowering valve port 14.3, so that the supply pressure pV is provided at the second bellows port 10.

For locking the hand lever 20 in the respective position, a locking unit 30 is provided. The locking unit 30 comprises a locking valve 32 which is biased to the locked position and comprises a release chamber 34 (cf., also Fig. 2). The locking valve 32 in the embodiment shown in Fig. 2 is formed as a return-to-ride valve 33 which comprises a return-to-ride piston 35 seated within the release chamber 34. The general function of a return-to-ride valve is known in the art and will not be described in detail here. A suitable return-to-ride valve, for example, is disclosed in EP 2 516 187 A1. For unlocking the locking valve 32 it is necessary to supply the release chamber 34 with a pressure. When there is ambient pressure in the release chamber 34, moving of the hand lever might be possible against the force of the spring 36, however is very difficult. Pressure within the release chamber 34 will lead to lifting the return-to-ride piston 35 with respect to Fig. 2 and thus opens the locking valve 32.

The locking unit 30 according to this embodiment moreover comprises an electromagnetic double valve arrangement 40 which is fluidly connected with the release chamber 34. The double valve arrangement 40 comprises a first control valve 41 and a second control valve 42. Both control valves 41, 42 are formed as 3/2-way valves. The first control valve 41 comprises a first control valve port 41.1 connected to the supply port 2, a second control valve port 41.2 connected to the release chamber 34 and a third control valve port 41.3 connected to the exhaust port 3. The second control valve 42 comprises a fourth control valve port 42.1 connected to the first bellows port 4, a fifth control valve port 42.2 connected to the release chamber 34, and a sixth control valve port 42.3 connected to the exhaust. Both, the first and the second control valves 41, 42 are spring biased into the first position which is shown in Fig. 1, in which the second control valve port 41.2 is connected to the third control valve port 41.3 and the fifth control valve port 42.2 is connected with the sixth control valve port 42.3. In this manner, in the first position of the first and second control valves 41, 42, the release chamber 34 is supplied with ambient pressure.

The first and the second control valves 41, 42 are connected to an electronic control unit ECU which might or might not be part of the valve device 1. The electronic control unit ECU provides a first switching signal S1 at the first control valve 41 and a second switching signal S2 at the second control valve 42. Both switching signals S1, S2 are identical, so that the first and the second control valves 41, 42 are switched simultaneously. Thus, the release chamber 34 is supplied with both, the supply pressure pV and the first bellows pressure pB1 which, in the driving position of the first lifting/lowering valve 12, is identical to the first levelling pressure pL1.

Thus, when the first lifting/lowering valve 12 is either in the drive position or the lifting position, the release pressure pR within the release chamber 34 is higher than the pressure which is supplied to the release chamber 34 when the first lifting/lowering valve 12 is in the lowering position. In the lowering position, the release pressure pR only equals the supply pressure pV. Therefore, it is more difficult to switch the first lifting/lowering valve 12 from the lowering position to any other position than vice versa. Thus, stability of the valve device in total can be increased.

Additionally, the valve device 1 comprises a check port 26 and a shutoff valve 50. The check port 26 can be used to check the second bellows pressure pB2, when the shutoff valve 50 is in the open position.

### List of reference signs

- 1: Valve device
- 2: Supply port
- 3: Exhaust port
- 4: first bellows port
- 6: First leveling valve port
- 8: second leveling valve port
- 10: second bellows port
- 12: first lifting/lowering valve
- 12.1: first lifting/lowering valve port
- 12.2: second lifting/lowering valve port
- 12.3: third lifting/lowering valve port
- 12.4: fourth lifting/lowering valve port
- 14: second lifting/lowering valve
- 14.1: fifth lifting/lowering valve port
- 14.2: sixth lifting/lowering valve port
- 14.3: seventh lifting/lowering valve port
- 14.4: eights lifting/lowering valve port
- 20: Hand lever
- 30: locking unit
- 32: locking valve
- 33: Return to ride valve
- 34: Release chamber
- 35: Return to ride piston
- 40: Electromagnetic double valve arrangement
- 41: First control valve
- 41.1: First control valve port
- 41.2: second control valve port
- 41.3: third control valve port
- 42: second control valve
- 42.1: fourth control valve port
- 42.2: fifth control valve port
- 42.3: sixth control valve port
- 50: shutoff valve
- ECU: Electronic control unit
- pB1: first bellows pressure
- pB2: second bellows pressure
- pL1: First leveling pressure
- pL2: second leveling pressure
- pR: Release pressure
- pV: Supply pressure
- S1: First switching signal
- S2: second switching signal

## Claims

1. A valve device (1) for an air suspension system in a trailer of a vehicle, said valve device comprising:
a supply port (2) for receiving a supply pressure (pV),
at least a first bellows port (4) for providing a first bellows pressure (pB1),
a first lifting/lowering valve (12) manually operable by a hand lever (20) and in fluid connection with the supply port (2) and the first bellows port (4), wherein the hand lever (20) is operable to selectively connect the first bellows port (4) with the supply port (2) for providing the first bellows pressure (pB1), and
a locking unit (30) for locking the position of the hand lever (20), the locking unit (30) comprising a locking valve (32) biased into the locked position and comprising a release chamber (34), wherein the locking valve (32) is switchable into a release position upon a release pressure (pR) being supplied into the release chamber (34),
**characterized by** an electromagnetic double valve arrangement (40) fluidly connected to the release chamber (34) and being switchable between a first release position, in which the release chamber (34) is in fluid connection with an exhaust port (3), and a second supply position, in which the release chamber (34) is in fluid connection with the supply port (2) and the first bellows port (4).

2. The valve device (1) according to claim 1, wherein the electromagnetic double valve arrangement (40) comprises a first control valve (41) and a second control valve (42).

3. The valve device (1) according to claim 2, wherein the first control valve (41) and the second control valve (42) are switchable simultaneously.

4. The valve device (1) according to any of the preceding claims 2 or 3, wherein
the first control valve (41) comprises a first control valve port (41.1) connected to the supply port (2), a second control valve port (41.2) connected to the release chamber (34), and a third control valve port (41.3) connected to the exhaust port (3), and wherein
the second control valve (42) comprises a fourth control valve port (42.1) connected to the first bellows port (4), a fifth control valve port (42.2) connected to the release chamber (34), and a sixth control valve port (42.3) connected to the exhaust port (3).

5. The valve device (1) according to any of the preceding claims, wherein the locking valve (32) is or comprises a return-to-ride valve.

6. The valve device (1) according to any of the preceding claims, wherein the first lifting/lowering valve (12) comprises a first lifting/lowering valve port (12.1) connected to the first bellows port (4), a second lifting/lowering valve port (12.2) connected to the exhaust port (3), a third lifting/lowering valve port (12.3) connected to the supply port (2), and a fourth lifting/lowering valve port (12.4) connected to a first leveling valve port (6).

7. The valve device (1) according to claim 6, wherein in a lowering position of the first lifting/lowering valve (12) the first lifting/lowering valve port (12.1) is connected to the second lifting/lowering valve port (12.2), in a driving position the first lifting/lowering valve port (12.1) is connected to the fourth lifting/lowering valve port (12.4), and in a lifting position the first lifting/lowering valve port (12.1) is connected to the third lifting/lowering valve port (12.3).

8. The valve device (1) according to any of the preceding claims, comprising a second lifting/lowering valve (14) for a second circuit.

9. The valve device (1) according to claim 8, wherein the second lifting/lowering valve (14) comprises a fifth lifting/lowering valve port (14.1) connected to a second bellows port (10), a sixth lifting/lowering valve port (14.2) connected to the exhaust port (3), a seventh lifting/lowering valve port (14.3) connected to the supply port (2) and an eighth lifting/lowering valve port (14.4) connected to a second leveling valve port (8).

10. The valve device (1) according to claim 9, wherein in a lowering position of the second lifting/lowering valve (14) the fifth lifting/lowering valve port (14.1) is connected to the sixth lifting/lowering valve port (14.2), in a driving position the fifth lifting/lowering valve port (14.1) is connected to the eighth lifting/lowering valve port (14.4), and in a lifting position the fifth lifting/lowering valve port (14.1) is connected to the seventh lifting/lowering valve port (14.3).

11. The valve device (1) according to any of the preceding claims, comprising a check port (26) and a shut-off valve (50) for closing off the check port (26).

## Patentansprüche

1. Ventilvorrichtung (1) für ein Luftfederungssystem in einem Anhänger eines Fahrzeugs, wobei die Ventilvorrichtung Folgendes umfasst:
eine Zulauföffnung (2) zum Empfangen eines Zulaufdrucks (pV),
mindestens eine erste Balgöffnung (4) zum Bereitstellen eines ersten Balgdrucks (pB1),
ein erstes Hub-/Absenkventil (12), das mittels eines Handhebels (20) manuell bedienbar ist und mit der Zulauföffnung (2) und der ersten Balgöffnung (4) in Fluidverbindung steht, wobei der Handhebel (20) bedienbar ist, um die erste Balgöffnung (4) mit der Zulauföffnung (2) zum Bereitstellen des ersten Balgdrucks (pB1) selektiv zu verbinden, und
eine Verriegelungseinheit (30) zum Verriegeln der Position des Handhebels (20), wobei die Verriegelungseinheit (30) ein Verriegelungsventil (32) umfasst, das in die verriegelte Position vorgespannt ist und eine Freigabekammer (34) umfasst, wobei das Verriegelungsventil (32) in eine Freigabeposition schaltbar ist, nachdem der Freigabekammer (34) ein Freigabedruck (pR) zugeführt wurde,
**gekennzeichnet durch** eine elektromagnetische Doppelventilanordnung (40), die fluidisch mit der Freigabekammer (34) verbunden und zwischen einer ersten Freigabeposition, in der die Freigabekammer (34) mit einer Auslassöffnung (3) in Fluidverbindung steht, und einer zweiten Zulaufposition, in der die Freigabekammer (34) mit der Zulauföffnung (2) und der ersten Balgöffnung (4) in Fluidverbindung steht, schaltbar ist.

2. Ventilvorrichtung (1) nach Anspruch 1, wobei die elektromagnetische Doppelventilanordnung (40) ein erstes Steuerventil (41) und ein zweites Steuerventil (42) umfasst.

3. Ventilvorrichtung (1) nach Anspruch 2, wobei das erste Steuerventil (41) und das zweite Steuerventil (42) gleichzeitig schaltbar sind.

4. Ventilvorrichtung (1) nach einem der vorhergehenden Ansprüche 2 oder 3, wobei
das erste Steuerventil (41) eine erste Steuerventilöffnung (41.1), die mit der Zulauföffnung (2) verbunden ist, eine zweite Steuerventilöffnung (41.2), die mit der Freigabekammer (34) verbunden ist, und eine dritte Steuerventilöffnung (41.3), die mit der Auslassöffnung (3) verbunden ist, umfasst und wobei
das zweite Steuerventil (42) eine vierte Steuerventilöffnung (42.1), die mit der ersten Balgöffnung (4) verbunden ist, eine fünfte Steuerventilöffnung (42.2), die mit der Freigabekammer (34) verbunden ist, und eine sechste Steuerventilöffnung (42.3), die mit der Auslassöffnung (3) verbunden ist, umfasst.

5. Ventilvorrichtung (1) nach einem der vorhergehenden Ansprüche, wobei das Verriegelungsventil (32) ein Zurück-zum-Fahren-Ventil ist oder ein solches umfasst.

6. Ventilvorrichtung (1) nach einem der vorhergehenden Ansprüche, wobei das erste Hub-/Absenkventil (12) eine erste Hub-/Absenkventilöffnung (12.1), die mit der ersten Balgöffnung (4) verbunden ist, eine zweite Hub-/Absenkventilöffnung (12.2), die mit der Auslassöffnung (3) verbunden ist, eine dritte Hub-/Absenkventilöffnung (12.3), die mit der Zulauföffnung (2) verbunden ist, und eine vierte Hub-/Absenkventilöffnung (12.4), die mit einer ersten Nivellierungsventilöffnung (6) verbunden ist, umfasst.

7. Ventilvorrichtung (1) nach Anspruch 6, wobei in einer Absenkposition des ersten Hub-/Absenkventils (12) die erste Hub-/Absenkventilöffnung (12.1) mit der zweiten Hub-/Absenkventilöffnung (12.2) verbunden ist, in einer Fahrposition die erste Hub-/Absenkventilöffnung (12.1) mit der vierten Hub-/Absenkventilöffnung (12.4) verbunden ist und in einer Hubposition die erste Hub-/Absenkventilöffnung (12.1) mit der dritten Hub-/Absenkventilöffnung (12.3) verbunden ist.

8. Ventilvorrichtung (1) nach einem der vorhergehenden Ansprüche, die ein zweites Hub-/Absenkventil (14) für einen zweiten Kreis umfasst.

9. Ventilvorrichtung (1) nach Anspruch 8, wobei das zweite Hub-/Absenkventil (14) eine fünfte Hub-/Absenkventilöffnung (14.1), die mit der zweiten Balgöffnung (10) verbunden ist, eine sechste Hub-/Absenkventilöffnung (14.2), die mit der Auslassöffnung (3) verbunden ist, eine siebte Hub-/Absenkventilöffnung (14.3), die mit der Zulauföffnung (2) verbunden ist, und eine achte Hub-/Absenkventilöffnung (14.4), die mit einer zweiten Nivellierungsventilöffnung (8) verbunden ist, umfasst.

10. Ventilvorrichtung (1) nach Anspruch 9, wobei in einer Absenkposition des zweiten Hub-/Absenkventils (14) die fünfte Hub-/Absenkventilöffnung (14.1) mit der sechsten Hub-/Absenkventilöffnung (14.2) verbunden ist, in einer Fahrposition die fünfte Hub-/Absenkventilöffnung (14.1) mit der achten Hub-/Absenkventilöffnung (14.4) verbunden ist und in einer Hubposition die fünfte Hub-/Absenkventilöffnung (14.1) mit der siebten Hub-/Absenkventilöffnung (14.3) verbunden ist.

11. Ventilvorrichtung (1) nach einem der vorhergehenden Ansprüche, die eine Prüföffnung (26) und ein Sperrventil (50) zum Schließen der Prüföffnung (26) umfasst.

## Revendications

1. Dispositif de valve (1) pour un système de suspension à air dans une remorque d'un véhicule, ledit dispositif de valve comprenant :
un orifice d'alimentation (2) pour recevoir une pression d'alimentation (pV),
au moins un premier orifice de soufflet (4) pour fournir une première pression de soufflet (pB1),
une première valve de levage / abaissement (12) pouvant être manuellement actionnée par un levier à main (20) et en raccordement de fluide avec l'orifice d'alimentation (2) et le premier orifice de soufflet (4), dans lequel le levier à main (20) peut être actionné pour raccorder sélectivement le premier orifice de soufflet (4) avec l'orifice d'alimentation (2) pour fournir la première pression de soufflet (pB1), et
une unité de verrouillage (30) pour verrouiller la position du levier à main (20), l'unité de verrouillage (30) comprenant une valve de verrouillage (32) sollicitée dans la position verrouillée et comprenant une chambre de libération (34), dans lequel la valve de verrouillage (32) peut être commutée dans une position de libération après qu'une pression de libération (pR) a été amenée dans la chambre de libération (34),
**caractérisé par** un agencement de double valve électromagnétique (40) raccordé de manière fluidique à la chambre de libération (34) et pouvant être commuté entre une première position de libération dans laquelle la chambre de libération (34) est en raccordement de fluide avec un orifice d'échappement (3) et une seconde position d'alimentation dans laquelle la chambre de libération (34) est en raccordement de fluide avec l'orifice d'alimentation (2) et le premier orifice de soufflet (4).

2. Dispositif de valve (1) selon la revendication 1, dans lequel l'agencement de double valve électromagnétique (40) comprend une première valve de commande (41) et une seconde valve de commande (42).

3. Dispositif de valve (1) selon la revendication 2, dans lequel la première valve de commande (41) et la seconde valve de commande (42) peuvent être simultanément commutées.

4. Dispositif de valve (1) selon l'une quelconque des revendications 2 ou 3, dans lequel :
la première valve de commande (41) comprend un premier orifice de valve de commande (41.1) raccordé à l'orifice d'alimentation (2), un deuxième orifice de valve de commande (41.2) raccordé à la chambre de libération (34) et un troisième orifice de valve de commande (41.3) raccordé à l'orifice d'échappement (3), et dans lequel :
la seconde valve de commande (42) comprend un quatrième d'orifice de valve de commande (42.1) raccordé au premier orifice de soufflet (4), un cinquième orifice de valve de commande (42.2) raccordé à la chambre de libération (34) et un sixième orifice de valve de commande (42.3) raccordé à l'orifice d'échappement (3).

5. Dispositif de valve (1) selon l'une quelconque des revendications précédentes, dans lequel la valve de verrouillage (32) est ou comprend une valve de retour à entraînement.

6. Dispositif de valve (1) selon l'une quelconque des revendications précédentes, dans lequel la première valve de levage / abaissement (12) comprend un premier orifice de valve de levage / abaissement (12.1) raccordé au premier orifice de soufflet (4), un deuxième orifice de valve de levage / abaissement (12.2) raccordé à l'orifice d'échappement (3), un troisième orifice de valve de levage / abaissement (12.3) raccordé à l'orifice d'alimentation (2) et un quatrième orifice de valve de levage / abaissement (12.4) raccordé à un premier orifice de valve de mise à niveau (6).

7. Dispositif de valve (1) selon la revendication 6, dans lequel dans une position d'abaissement de la première valve de levage / abaissement (12), le premier orifice de valve de levage / abaissement (12.1) est raccordé au deuxième orifice de valve de levage / abaissement (12.2), dans une position d'entraînement dans laquelle le premier orifice de valve de levage / abaissement (12.1) est raccordé au quatrième orifice de valve de levage/ abaissement (12.4) et dans une position de levage dans laquelle le premier orifice de valve de levage / abaissement (12.1) est raccordé au troisième orifice de valve de levage / abaissement (12.3).

8. Dispositif de valve (1) selon l'une quelconque des revendications précédentes, comprenant une seconde valve de levage / abaissement (14) pour un second circuit.

9. Dispositif de valve (1) selon la revendication 8, dans lequel la seconde valve de levage / abaissement (14) comprend un cinquième orifice de valve de levage / abaissement (14.1) raccordé au deuxième orifice de soufflet (10), un sixième orifice de valve de levage / abaissement (14.2) raccordé à l'orifice d'échappement (3), un septième orifice de valve de levage / abaissement (14.3) raccordé à l'orifice d'alimentation (2) et un huitième orifice de valve de levage / abaissement (14.4) raccordé à un second orifice de valve de mise à niveau (8).

10. Dispositif de valve (1) selon la revendication 9, dans lequel, dans une position d'abaissement de la deuxième valve de levage / abaissement (14), le cinquième orifice de valve de levage / abaissement (14.1) est raccordé au sixième orifice de valve de levage / abaissement (14.2), dans une position d'entraînement, le cinquième orifice de valve de levage / abaissement (14.1) est raccordé au huitième orifice de valve de levage / abaissement (14.4) et dans une position de levage, le cinquième orifice de valve de levage / abaissement (14.1) est raccordé au septième orifice de valve de levage / abaissement (14.3).

11. Dispositif de valve (1) selon l'une quelconque des revendications précédentes, comprenant un orifice antiretour (26) et une valve d'arrêt (50) pour fermer l'orifice antiretour (26).
